# EUROPEAN PATENT APPLICATION

(11) **EP 2 713 467 A1**
(43) Date of publication of application: **02.04.2014**
(21) Application number: 12290321.4
(22) Date of filing: 28.09.2012
(51) Int. Cl.: H02J 3/32, H02J 7/02

(54) **Method for supporting power balancing**

(71) Applicant: Alcatel Lucent, 75007 Paris (FR)
(72) Inventor: Noack, Ferenc, 12353 Berlin (DE); Lange, Christian, 10365 Berlin (DE); Ballentin, Ralph, 16547 Birkenwerder (DE)
(74) Representative: Zinsinger, Norbert

(57) **Abstract**

The present invention concerns a method for supporting power balancing of one or more energy distribution grids (1). The method comprises detecting, in particular by an energy management system (7), an energy surplus and/or an energy demand within the one or more energy distribution grids (1) and controlling a transfer of energy from an energy storage (2) of a vehicle (3) or from energy storages (2) of two or more vehicles (3) via inductive coupling to the one or more energy distribution grids (1) in case of an energy demand within the one or more energy distribution grids (1) and/or a transfer of energy from the one or more energy distribution grids (1) via inductive coupling to the energy storage (2) of a vehicle (3) or to the energy storages (2) of two or more vehicles (3) in case of an energy surplus within the one or more energy distribution grids (1). Furthermore, the present invention concerns a vehicle (3) and an energy management system (7) for one or more energy distribution grids (1).

## Description

### Field of the Invention

The invention relates to energy distribution grids and more specifically to a method for supporting power balancing of one or more energy distribution grids, wherein an energy distribution grid herein is to be understood as a network comprising in particular cables, power lines, power stations and sub-stations and furthermore energy generating and energy consuming devices and roads adjacent to the sub-stations of the energy distribution grids.

### Background of the Invention

Future smart energy grids will have more and more millions of distributed energy sources, which feed their energy into the low and middle voltage grids. Most of these energy sources are renewable sources varying their power characteristic depending on the weather conditions and the day time. This results in a decreasing quality of the energy the grid provides as to the frequency and the voltage. Furthermore, this leads to more unusable reactive power in these grids, in particular which, when unused and fed back into the grid, does not fit to the frequency or phase of the active voltage of the energy distribution grid.

To provide solutions to these problems, conventionally the following options are provided: A first option is to expand the existing distribution grids. However, the prior art grids are not designed for the energy distribution from entities that could be consumers and producers at the same time and who can not react properly on the varying of the energy production of the in particular renewable energy sources. As a second option, the renewable energy sources are temporarily disconnected from the energy grids in case of critical energy surplus productions destabilizing the energy grids. Thereby the energy surplus is wasted unused, for example in wind turbine farms de-activated in case there are too strong winds. As a third solution, the energy surplus is stored temporarily in energy storages which are only designed for this particular purpose of energy storage of over-produced energy. However, this kind of energy storage is very expensive, because the energy storage devices such as for example separate energy storages are expensive themselves and, furthermore, because these energy storage devices are used only for this purpose.

### Summary of the Invention

The object of the present invention is to improve energy distribution grids, in particular energy distribution grids with renewable energy sources. The object of the present invention is achieved by a method for supporting power balancing of one or more energy distribution grids, the method comprising detecting, in particular by an energy management system, an energy surplus and/or an energy demand within the one or more energy distribution grids and controlling a transfer of energy from an energy storage of a vehicle or from energy storages of two or more vehicles via inductive coupling to the one or more energy distribution grids in case of an energy demand within the one or more energy distribution grids and/or a transfer of energy from the one or more energy distribution grids via inductive coupling to the energy storage of a vehicle or to the energy storages of two or more vehicles in case of an energy surplus within the one or more energy distribution grids.

The object of the invention is further achieved by one or more vehicles and an energy management system for one or more energy distribution grids. Each vehicle according to the present invention comprises an energy storage, a control unit and at least one inductive coupling element, wherein the at least one inductive coupling element is adapted to enable a transfer of energy from and/or to one or more energy distribution grids to and/or from the vehicle, respectively. This is done via inductive coupling between the at least one inductive coupling element of the vehicle and one or more inductive charging coils implemented into one or more roads adjacent to the one or more energy distribution grids, in case the vehicle passes the one or more roads in which the inductive charging coils are implemented. Furthermore, the control unit is adapted to control the transfer of energy from the energy storage of the vehicle via inductive coupling to one or more of the energy distribution grids and/or the transfer of energy from one or more of the energy distribution grids via inductive coupling to the energy storage of the vehicle. The energy storage of the vehicle can be implemented as a battery, in particular an electrical battery, or another, in particular electrical, chemical or electro-chemical, energy storage. This might be for example one or more capacitors or mechanical fly wheels used to store energy in vehicles. Another example for an energy storage might be implemented by using a hydrogen producing system implemented into the vehicle, this means the electric energy provided to the vehicle via inductive coupling from the one or more energy distribution grids is used to generate hydrogen, which is then stored in an appropriate energy storage of the vehicle. The energy management system is adapted to detect an energy surplus and/or an energy demand within the one or more energy distribution grids, and to control a transfer of energy from an energy storage of a vehicle or from energy storages of two or more vehicles via inductive coupling to the one or more of the energy distribution grids in case of an energy demand within the one or more energy distribution grids and/or a transfer of energy from the one or more of the energy distribution grids via inductive coupling to the energy storage of a vehicle or to the energy storages of two or more vehicles in case of an energy surplus within the one or more of the energy distribution grids.

An energy management system as mentioned herein could be described in general as a system for, of or within the energy distribution grid which in particular controls the energy in the energy distribution grid, this means how much energy in the energy distribution grid is available, how much energy is provided by the energy generating devices, how much energy is consumed by the energy consuming devices and how the energy is transported within the energy distribution grid or between energy distribution grids and in particular between the one or more energy distribution grids and the vehicles' energy storages used for a dynamic energy storage and transport as will be described in more detail below. If in the present application the wording "energy management system "of" the one or more energy distribution grids" is used, the word "of" can be understood as "part of", but likewise comprises the sense of "for", this means that an energy management system of one or more energy distribution grids could be a part of one or more energy distribution grids or could be a separate unit designed "for" one or more energy distribution grids, i.e. to be used for one or more energy distribution grids. Similarly, the wording "for" in this context could be understood in the above described sense "for" and "of" likewise. The same applies in regard of the traffic management system.

For the above purposes, the energy management system is provided with and/or can interact with in particular measuring means and energy processing means such as power stations or power sub-stations. The energy management system is implemented as one or more hardware devices and/or as software, in particular for processing the measuring and controlling, and/or a combination thereof.

Beside the energy management system, in the present invention, one or more traffic management systems might be implemented within one or more energy distribution grids. In particular, one traffic management system might be implemented within one energy distribution grid. A traffic management system is designed in particular to keep the contact to the vehicles passing the roads pertaining to the one or more energy distribution grids. In preferred embodiments, as will be described in more detail below, the traffic management system controls the driving as to the selected or at least suggested/recommended path of the vehicles and the energy transfer between the vehicles and the energy distribution grids, in particular by corresponding notifications to the vehicles. The traffic management system comprises in particular a sending station to communicate with the vehicles and possibly with the energy management system. Therefore, the traffic management system comprises hardware, software or a combination thereof, in particular electronic data processing means such as CPU, microprocessors, receiving and sending means, communications means etc.

The functions of the energy management system and the traffic management system might be implemented by two separate units as is described primarily within the following description. However, the functions of the energy management system and the traffic management system might be implemented by and/or within one unit which is provided by the respective means. In particular, the energy management system might comprise the means like communication means of the traffic management system, so that the energy management system might communicate directly with the vehicles and a communication via a separate traffic management system is not necessary. In this case the corresponding communication and processing steps might be implemented within the one combined energy/traffic management system by functions or elements of the one unit.

Further advantages of the present invention are achieved by embodiments of the invention indicated by the dependent claims.

In a preferred embodiment, the transfer of energy between the one or more vehicles and the one or more energy distribution grids is controlled by actuating one or more inductive charging coils, which are electrically connected with one or more of the energy distribution grids and implemented into one or more roads for the transfer of energy via electromagnetic coupling. In addition or alternatively, the transfer of energy is controlled by actuating at least one inductive coupling element, which is electrically connected with the energy storage of the vehicle, for the transfer of energy via electromagnetic coupling.

In a preferred embodiment the one or more inductive charging coils are controlled to transfer energy from a vehicle passing the respective inductive charging coil to the one or more energy distribution grids and/or to transfer energy from the one or more energy distribution grids to the vehicle passing the respective inductive charging coil.

In a preferred embodiment, the transfer of energy is controlled by detecting a vehicle passing the respective inductive charging coil and in case of identifying such vehicle and detecting an energy surplus and/or an energy demand within the one or more energy distribution grids, actuating the one or more inductive charging coils to transfer energy from the vehicle passing the respective inductive charging coil to the one or more energy distribution grids and/or to transfer energy from the one or more energy distribution grids to the vehicle passing the respective inductive charging coil.

In a preferred embodiment, the control of a transfer of energy is implemented by notification messages to the vehicles. The energy management system sends, in particular by means of a traffic management system, a notification message to the vehicle or to two or more vehicles to cause them to use the one or more roads in which the one or more inductive charging coils are implemented, and to transfer energy from the vehicle or the vehicles passing the respective inductive charging coil to the one or more energy distribution grids in case of an energy demand within the one or more energy distribution grids or to transfer energy from the one or more energy distribution grids to the vehicle or the vehicles passing the respective inductive charging coil in case of an energy surplus within the one or more energy distribution grids, respectively.

In a preferred embodiment, for the situation, when the vehicle passes the one or more inductive charging coils, an energy management system of the one or more energy distribution grids controls the one or more inductive charging coils such as by these to receive energy from the energy storage of the vehicle via inductive coupling in case of an energy demand within the energy distribution grid or to transmit energy to the energy storage of the vehicle via inductive coupling in case of an energy surplus within the energy distribution grid, respectively.

In a preferred embodiment, an energy management system of the one or more energy distribution grids, in particular by means of a traffic management system, or a traffic management system checks the charging status of the energy storages of the vehicles to determine, whether the energy storages of the vehicles can be charged, or de-charged, respectively, and sends a notification message to the vehicles with the energy storages to be charged to cause them to use the one or more roads in which the one or more inductive charging coils are implemented, which are electrically connected with the one or more energy distribution grids with an energy surplus, and to transfer energy from the one or more energy distribution grids with an energy surplus to the one or more vehicles passing the respective inductive charging coil. In addition or alternatively, it sends a notification message to the vehicles with the energy storages to be de-charged to cause them to use the one or more roads in which the one or more inductive charging coils are implemented, which are electrically connected with the one or more energy distribution grids with an energy demand, and to transfer energy from the one or more of the vehicles passing the respective inductive charging coil to the one or more energy distribution grids with an energy demand.

In a preferred embodiment, the traffic management system notifies the vehicles with energy storages to be charged to cause them to use the roads in which the one or more charging coils are implemented, which are electrically connected with an energy distribution grid, where an energy surplus is expected, and/or the traffic management system notifies the vehicles with energy storages to be de-charged to cause them to use the roads in which the one or more charging coils are implemented, which are electrically connected with an energy distribution grid, where an energy demand is expected, in case the energy management system determines the energy surplus or demand of the one or more energy distribution grids to be expected and notifies the traffic management system of the energy distribution grids, where an energy surplus or demand is expected, respectively. Based on this notification from the energy management system, the traffic management system sends a notification message to the vehicles with the energy storages to be charged to cause them to use the one or more roads in which the one or more inductive charging coils are implemented, which are electrically connected with the one or more energy distribution grids with an energy surplus, and to transfer energy from the one or more energy distribution grids with an energy surplus to the one or more vehicles passing the respective inductive charging coil. In addition or alternatively, the traffic management system sends a notification message to the vehicles with the energy storages to be de-charged to cause them to use the one or more roads in which the one or more inductive charging coils are implemented, which are electrically connected with the one or more energy distribution grids with an energy demand, and to transfer energy from the one or more of the vehicles passing the respective inductive charging coil to the one or more energy distribution grids with an energy demand.

In a preferred embodiment, the energy management system and/or the traffic management system controls the transfer of energy from vehicles passing coincidentally the roads in which inductive charging coils are implemented, which are electrically connected with the one or more energy distribution grids, to the one or more energy distribution grids via inductive coupling according to the energy storage status of the vehicles and the energy surplus or demand of the one or more energy distribution grids.

In a preferred embodiment, the at least one inductive coupling element of the vehicle is activated to enable the transfer of energy from one or more energy distribution grids with energy surplus to the vehicle via inductive coupling between one or more of the inductive charging coils, which are implemented into the one or more roads adjacent to the one or more energy distribution grids on the one hand, and the at least one inductive charging element of the vehicle on the other hand, whereby the energy storage of the vehicle is charged and/or the at least one inductive coupling element of the vehicle is activated to enable the transfer of energy from the vehicle to one or more of the energy distribution grids with an energy demand via inductive coupling between the one or more inductive charging coils which are implemented into the one or more roads pertaining to, i.e. adjacent to the one or more energy distribution grids, i.e. to the sub-stations of the respective energy distribution grids on the one hand, and the inductive coupling element of the vehicle on the other hand, whereby the energy storage of the vehicle is de-charged.

In a preferred embodiment, the energy storage of the vehicle is charged with at least a part of the received energy and the portion of the received energy which is not charged is consumed by the vehicle.

In a preferred embodiment, the method is used in conjunction with an electric vehicle, i.e. a vehicle which is or at least could be driven by electric energy such as an electric vehicle in the narrow sense or a hybrid driven vehicle which at least can optionally be driven by means of electric energy. In a preferred embodiment, the received energy by which the energy storage is not charged is consumed by the vehicle, in particular for the driving of the vehicle. The received energy might be immediately consumed. The received energy might not be consumed immediately, but later; this means at least a part of the received and charged energy is not transferred back from the energy storage of the vehicle to one or more energy distribution grids, but consumed by the vehicle. Through the at least partial consumption of the received energy by the vehicle, the operating range of the electric vehicle is extended. In particular, the electric vehicle needs not to go home or elsewhere to a docking station to recharge the energy storage as the vehicle is provided with energy on the way, which can be immediately used for driving or charged and used for driving when needed.

In this context, it is noted that, throughout this application, by the singular form of a device, for example "a vehicle", a plurality of such devices is referred to, likewise, if not only one singular device is meant expressively or by the context of the embodiment.

Furthermore, if throughout the present description, it is disclosed that a vehicle is activated or activates (another device), this is to be understood, unless otherwise indicated by the technical context, that the vehicles is activated or activates (another device) in particular by processing means implemented in the vehicle such as a CPU (=Central Processing Unit) or a microprocessor. The vehicle might activate or be activated in particular by a control unit comprising the corresponding processing means.

Furthermore, if throughout the present description, it is disclosed that the vehicle receives and/or sends a notification, it is to be understood that the notification might equivalently in addition and/or alternatively be sent and/or received by the driver of the vehicle. This means that a notification received e.g. by a navigation system or any other communication means or controlling means of the vehicle might be provided to and/or from the driver, e.g. via a display or other input and output means, correspondingly, so that the driver can take the notification into account or implements the respective notification, for example to chose a particular path via one or more roads pertaining to the energy distribution grids. Similarly, according to the technical context, each processing or controlling, in particular in the context of the described vehicle within the present invention, might be implemented, controlled and/or initiated by the driver, automated processing means, processing means controlled in particular by the driver and/or by other disclosed elements or devices or a combination thereof as will be readily understood by the detailed description below.

In a preferred embodiment, the vehicle activates the one or more inductive charging coils, which are implemented into the one or more roads pertaining to the one or more energy distribution grids, to enable the transfer of energy from the one or more energy distribution grids with an energy surplus to the vehicle via inductive coupling between the one or more inductive charging coils which are implemented into the one or more roads pertaining to the one or more energy distribution grids, and the at least one inductive charging element of the vehicle, whereby the energy storage of the vehicle is charged, and/or to enable the transfer of energy from the vehicle to the one or more energy distribution grids with an energy demand via inductive coupling between the one or more inductive charging coils which are implemented into the one or more roads pertaining to the one or more energy distribution grids, and the at least one inductive coupling element of the vehicle, whereby the energy storage of the vehicle is de-charged.

In a preferred embodiment, the vehicle, in particular by means of its control unit, checks the status of the energy storage to determine, whether the energy storage of the vehicle is to be charged or to be de-charged, and determines by the checked status of the energy storage to use one or more of the roads of an energy distribution grid with energy surplus, if the energy storage of the vehicle is to be charged, and to use one or more of the roads of an energy distribution grid with energy demand, if the energy storage of the vehicle is to be de-charged.

In a preferred embodiment, the vehicle after determining the status of its energy storage sends a request message to the energy management system, in particular via the traffic management system, or to a traffic management system to be notified about the roads to be used by the vehicle to cause these to pass the one or more inductive charging coils implemented into the respective roads to enable the transfer of energy from the energy storage of the vehicle to the one or more energy distribution grids, whereby the energy storage of the vehicle is de-charged, or to enable the transfer of energy from the one or more energy distribution grids to the energy storage of the vehicle, whereby the energy storage of the vehicle is charged.

In a preferred embodiment, the energy management system activates the inductive charging coils, which are implemented into the one or more roads pertaining to the one or more energy distribution grids, if a vehicle passes the one or more roads into which one or more inductive charging coils are implemented, to enable the transfer of energy from the one or more energy distribution grids with energy surplus to the vehicle via inductive coupling between the one or more inductive charging coils which are implemented into the one or more roads pertaining to the one or more energy distribution grids, and the at least one inductive charging element of the vehicle, whereby the energy storage of the vehicle is charged, and/or to enable the transfer of energy from the vehicle to the one or more energy distribution grids with an energy demand via inductive coupling between the one or more inductive charging coils, which are implemented into the one or more roads pertaining to the one or more energy distribution grids, and the at least one inductive coupling element of the vehicle, whereby the energy storage of the vehicle is de-charged.

In a preferred embodiment, a vehicle provides for an energy transport from one energy distribution grid to another, the energy storage of the vehicle being charged by an energy distribution grid with energy surplus and de-charged by an energy distribution grid with energy demand in case the vehicle moves coincidentally or on notification by the energy management system and/or the traffic management system from the roads in which inductive charging coils are implemented which are electrically connected with the energy distribution grid with energy surplus to the roads in which inductive charging coils are implemented which are electrically connected with the energy distribution grid with energy demand. Thereby, the extension of the energy distribution grids, in particular by the establishing of more power lines, cables etc. is replaced by the moving vehicle serving as a dynamic extension of the energy distribution grids, the vehicle thereby providing dynamic physical energy transport by transporting the energy from one grid segment to one or more other grid segments or from one energy distribution grid to another energy distribution grid.

In a preferred embodiment, the transfer of energy to and from the one or more energy distribution grids from and to the one or more vehicles' energy storages respectively takes falling and rising energy prices into account. As illustrative example of an energy management which takes the energy prices into account, in the following scenario, in particular by means of the energy management system and/or the traffic management system, the one or more energy distribution grids and/or the one or more the vehicles, in particular by the control unit of the one or more vehicles, are notified to be caused to transfer energy from the one or more energy distribution grids to the one or more vehicles in case of for example fallen energy prices to that the one or more vehicles' energy storages can be charged with cheap energy. In case of risen energy prices the energy is transferred to the one or more energy distribution grids so that the one or more energy distribution grids are provided by the cheap energy stored previously in the one or more vehicles' energy storages instead of being forced to buy expensive energy from other energy providers. Furthermore, by the use of vehicles' energy storages as dynamic energy storage and transportation means, the energy distribution grid quality, in particular as to the frequency and voltage of the provided energy, is enhanced, the energy distribution is stabilized and variations in the energy production and consumption are balanced.

### Brief description of the drawing

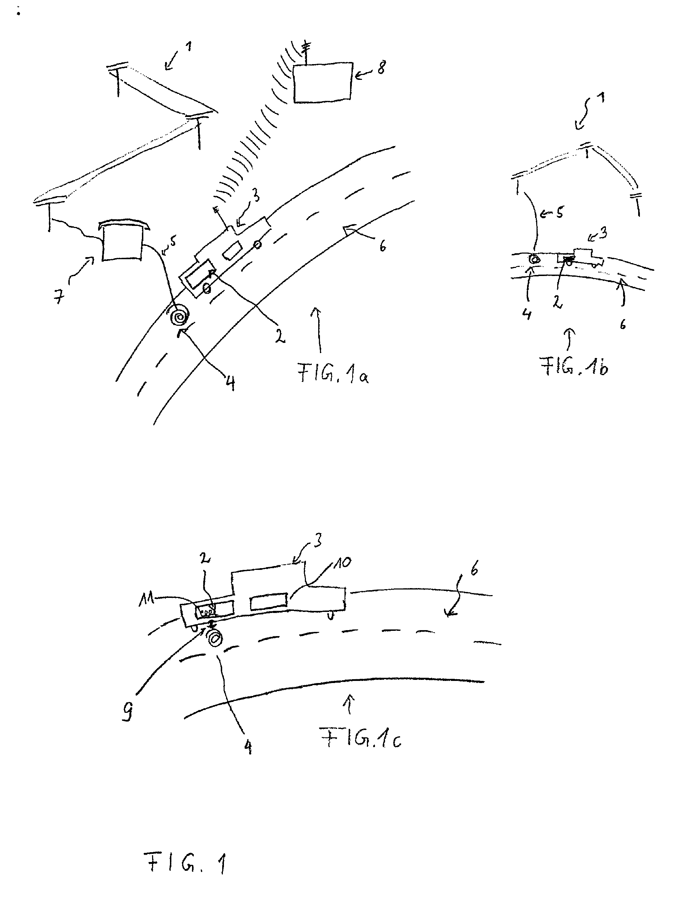

The advantages and embodiments of the present invention will be fully understood by the following detailed description, wherein
- Fig. 1 a: depicts a part of an energy distribution grid giving an overview of the structure and of exemplary embodiments of the method for supporting power balancing of one or more energy distribution grids
- Fig. 1b: depicts another part of an energy distribution grid
- Fig. 1c: depicts another part of an energy distribution grid.

### Description of embodiments

In the following, exemplary embodiments are described, only for illustrative reasons, whereas the scope of the invention is defined by the claims.

Each of figs. 1a, 1b, 1c depicts parts of an energy distribution grid 1, wherein an energy distribution grid might also be referenced to as energy distribution network, and elements present in an energy distribution grid 1. The elements depicted in each of figs. 1a, 1b, 1c are not to be understood as to be present only in the respective fig. 1a, 1b or 1c in which they are actually depicted, but might actually be present - though not depicted - in the other figures similarly as it will be clearly derivable by the following description. Similarly the parts of an energy distribution grid depicted in figs. 1a, 1b and 1c might belong to the same energy distribution grid or to different energy distribution grid as it will be readily understood by the technical context of the described embodiment.

In figs. 1a and 1b, for illustrative reasons, the power lines of the energy distribution grids 1 are depicted only over three power masts in each energy distribution grid 1. Fig. 1 a depicts for exemplary reasons, one energy management system 7 and one traffic management system 8. An energy management system 7 and/or a traffic management system 8, however, might be provided within each energy distribution grid 1. Alternatively, one energy management system 7 and/or one traffic management system 8 might be responsible for more than one energy distribution grid 1. Furthermore, each of figs. 1a, 1b and 1c shows roads 6, vehicles 3 each with an energy storage 2, wherein in an alternative embodiment, a vehicle 3 might be provided with two or more energy storages 2, and in particular shows in fig. 1 c in more detail a vehicle 3 which uses the one or more roads 6 adjacent to the energy distribution grids 1. Fig. 1 c depicts furthermore a control unit 10 of the vehicle 3, which is implemented into the respective vehicle 3. Charging coils 4 are implemented into each road 6, wherein the inductive charging coils might be implemented under the bitumen or in the bitumen of the road or generally spoken under the surface of the road. Into one road, one or a plurality of inductive charging coils 4 might be implemented. An inductive charging coil 4 is electrically connected 5 with an energy distribution grid 1. The electrical connection 5 between an inductive charging coil 4 and an energy distribution grid 1 might be provided via an energy management system 7 or via a sub-station 7. The energy management system 7 might by physically located in a building of the sub-station 7. The electrical connection 5 between an inductive charging coil 4 and an energy distribution grid 1 might be provided otherwise, in particular directly via cable without being directed via or through a separate building.

The energy is transferred from the energy storage 2 of the vehicle 3, in particular via inductive coupling, to one or more of the energy distribution grids 1 and/or analogously from one or more of the energy distribution grids 1 to the energy storage 2 of the vehicle 3. The energy is transferred by the use of one or more of those inductive charging coils 4, which are electrically connected 5 with one or more of the energy distribution grids 1 and implemented into one or more roads 6 for the transfer of energy via electromagnetic coupling. Additionally or alternatively, the energy is transferred by the use of at least one inductive coupling element 11, which is electrically connected with the energy storage 2 of the vehicle 3, for the transfer of energy via electromagnetic coupling 9.

In alternative embodiments, inductive charging coils 4 are implemented into devices adjacent to the roads 6, for example in housings situated at the border of the roads 6 (not shown) so that an electromagnetic coupling between the vehicles 3 passing thereby while driving on the roads or standing for example on a parking lot or place nearby on the one side and the inductive charging coils 4 on the other side is possible. In particular, the inductive charging coils 4 might be implemented into the ground of the respective parking lot used by the vehicles 3. The inductive charging coils 4 might be provided higher than the upper surface of the road or even of the vehicle, in particular into the air, for example on masts so that inductive coupling between the inductive charging coils 4 and the vehicles 3 is possible.

In order to control the transfer of energy between the vehicle and the distribution grids, the one or more inductive charging coils 4 are controlled to transfer energy from a vehicle 3 passing the respective inductive charging coil 4, in particular by their going along these roads 6 or standing on the roads 6, in which the inductive charging coils 4 are implemented, to the one or more energy distribution grids 1 and/or to transfer energy from the one or more energy distribution grids 1 to the vehicle 3 passing the respective inductive charging coils 4. An energy management system 7 of the one or more energy distribution grids 1 detects an energy surplus and/or an energy demand within one of the one or more energy distribution grids 1; then the energy management system 7 sends, in particular by means of the traffic management system 8, a notification message to the vehicle 3 or to two or more vehicles 3 making these or at least their driver to use the one or more of those roads 6 in which the one or more inductive charging coils 4 are implemented, and to transfer energy from the one or more vehicles 3 passing the respective inductive charging coil 4 to the one or more energy distribution grids 1 in case of an energy demand within the one or more energy distribution grids 1 and/or to transfer energy from the one or more energy distribution grids 1 to the vehicle 3 or the vehicles 3 passing the respective inductive charging coil 4 in case of an energy surplus within the one or more energy distribution grids 1. If the vehicle 3 is notified such as to cause it to use those roads 6 in which the respective charging coils 4 are implemented, the vehicle 3 might use a longer path than that originally planned, so that the vehicle 3 might accept a detour for being able to use those roads 6 in which the inductive charging coils 4 are implemented.

The vehicle 3 might be notified by the traffic management system 8 via electromagnetic communication as depicted in an exemplary manner in fig. 1a by the antenna on top of the vehicle 3 and the electromagnetic waves depicted between the vehicle 3 and the traffic management system 8. The notification of the vehicle 3 from the traffic management system 8 and/or from the energy management system 7 and between the traffic management system 8 and the energy management system 7 and vice versa might be implemented via any other communication means such as mobile phone, in particular SMS, via a message by a navigation router or by any, in particular electronic, communication medium.

When the vehicle 3 passes the one or more inductive charging coils 4, an energy management system 7 of the one or more energy distribution grids 1 controls one or more inductive charging coils 4 to receive energy from the energy storage 2 of the vehicle 3 via inductive coupling 9 in case of an energy demand within the energy distribution grid 1 and to transmit energy to the energy storage 2 of the vehicle 3 via inductive coupling 9 in case of an energy surplus within the energy distribution grid 1. The energy management system 7 of the one or more energy distribution grids 1, in particular by means of a traffic management system 8, or a traffic management system 8 checks the charging status of the energy storages 2 of the vehicles 3 to determine, whether the energy storages 2 of the vehicles 3 can be charged or de-charged, and sends a notification message to the vehicles 3 with the energy storages 2 to be charged to cause them to use the one or more roads 6 in which the one or more inductive charging coils 4 are implemented, which are electrically connected 5 with the one or more energy distribution grids 1 provided with an energy surplus or at which an energy surplus is expected, so as to enable the transfer of energy from the one or more energy distribution grids 1 provided with an energy surplus or at which an energy surplus is expected to the one or more vehicles 3 passing the respective inductive charging coil 4, wherein the energy management system 7 determines the energy surplus or that such energy surplus is expected as to the one or more energy distribution grids 1, respectively and notifies the traffic management system 8 accordingly.

Alternatively or in addition the energy management system 7 of the one or more energy distribution grids 1, in particular by means of a traffic management system 8, or the traffic management system 8 sends a notification message to the vehicles 3 with the energy storages 2 to be de-charged to cause them to use the one or more roads 6, in which the one or more inductive charging coils 4 are implemented which are electrically connected 5 with the one or more energy distribution grids 1 suffering an energy demand or at which an energy demand is expected, so as to enable the transfer of energy from the one or more of the vehicles 3 passing the respective inductive charging coil 4 to the one or more energy distribution grids 1 suffering an energy demand or at which an energy demand is expected, wherein the energy management system 7 determines the energy demand or that an energy demand is expected as to the one or more energy distribution grids 1, respectively, and notifies the traffic management system 8 accordingly.

The traffic management system 8 further controls the transfer of energy from vehicles 3 passing coincidentally those roads 6 in which inductive charging coils 4 are implemented that are electrically connected with the one or more energy distribution grids 1, to the one or more energy distribution grids 1 via inductive coupling according to the energy storage status of the vehicles 3 and the energy surplus or demand of the one or more energy distribution grids 1. The inductive coupling element 11 of the vehicle 3 is activated to enable the transfer of energy from or to one or more energy distribution grids 1 with an energy surplus or demand to or from the vehicle 3, respectively, via inductive coupling 9 between one or more of the inductive charging coils 4 that are implemented into the one or more roads 6 adjacent to the one or more energy distribution grids 1, and the inductive charging element 11 of the vehicle, wherein the energy storage 4 of the vehicle 3 is charged or de-charged, respectively.

In a preferred embodiment, the vehicle 3, in particular by processing means implemented in the vehicle, activates the one or more inductive charging coils 4, which are implemented into the one or more roads 6 adjacent to the one or more energy distribution grids 1, to enable the transfer of energy from or to the one or more energy distribution grids 1 with an energy surplus or demand to or from the vehicle 3 respectively via inductive coupling 9 between the one or more inductive charging coils 4, which are implemented into the one or more roads 6 of the one or more energy distribution grids 1, and the inductive charging element 11 of the vehicle, wherein the energy storage 4 of the vehicle 3 is charged or de-charged, respectively.

Preferably, the vehicle 3, in particular by processing means implemented in the vehicle, checks the status of the energy storage 2 to determine, whether the energy storage 2 of the vehicle 3 is to be charged or de-charged, so as to cause the driver of the vehicle to use the roads 6 of an energy distribution grid 1 with energy surplus or demand, if the energy storage of the vehicle 3 is to be charged or de-charged, respectively.

The vehicle 3, in particular by its processing means, after determining its energy storage status, sends a request message to the energy management system 7, in particular via the traffic management system 8, or to a traffic management system 7 to be notified about the roads 6 to be used by the vehicle 3 to pass the one or more inductive charging coils 4 implemented into the respective roads 4 in order to transfer energy from or to the energy storage 2 of the vehicle 3 to or from the one or more energy distribution grids 1, wherein the energy storage 2 of the vehicle 3 is de-charged or charged, respectively.

The energy management system 7 activates the inductive charging coils 4 which are implemented into the one or more roads 6 of the one or more energy distribution grids 1, if a vehicle 3 passes the one or more roads 6, into which one or more inductive charging coils 4 are implemented, to enable the transfer of energy from or to one or more energy distribution grids 1 with energy surplus or demand, to or from the vehicle 3, respectively, via inductive coupling 9 between the one or more inductive charging coils 4, which are implemented into the one or more roads 6 adjacent to the one or more energy distribution grids 1, and the at least one inductive charging element 11 of the vehicle, wherein the energy storage 4 of the vehicle 3 is charged or de-charged, respectively.

## Claims

1. A method for supporting power balancing of one or more energy distribution grids (1), the method comprising:
- detecting, in particular by an energy management system (7), an energy surplus and/or an energy demand within the one or more energy distribution grids (1); and
- controlling a transfer of energy from an energy storage (2) of a vehicle (3) or from energy storages (2) of two or more vehicles (3) via inductive coupling to the one or more energy distribution grids (1) in case of an energy demand within the one or more energy distribution grids (1) and/or a transfer of energy from the one or more energy distribution grids (1) via inductive coupling to the energy storage (2) of a vehicle (3) or to the energy storages (2) of two or more vehicles (3) in case of an energy surplus within the one or more energy distribution grids (1).

2. The method according to claim 1, the step of controlling the transfer of energy comprising:
- actuating one or more inductive charging coils (4), which are electrically connected (5) with one or more of the energy distribution grids (1) and implemented into one or more roads (6) for the transfer of energy via electromagnetic coupling, and/or
- actuating at least one inductive coupling element (11), which is electrically connected with the energy storage (2) of the vehicle (3), for the transfer of energy via electromagnetic coupling (9).

3. The method according to claim 2, the step of controlling the transfer of energy comprising:
- detecting a vehicle (3) passing the respective inductive charging coil (4); and
- in case of identifying such vehicle and detecting an energy surplus and/or an energy demand within the one or more energy distribution grids, actuating the one or more inductive charging coils (4) to transfer energy from the vehicle (3) passing the respective inductive charging coil (4) to the one or more energy distribution grids (1) and/or to transfer energy from the one or more energy distribution grids (1) to the vehicle (3) passing the respective inductive charging coil (4).

4. The method according to claim 2, the step of controlling the transfer of energy comprising:
- sending, in particular by the energy management system (7), a notification message, in particular by means of a traffic management system (8), to the vehicle (3) or to two or more vehicles (3) to cause them to use the one or more roads (6) in which the one or more inductive charging coils (4) are implemented, and to transfer energy from the vehicle (3) or the vehicles (3) passing the respective inductive charging coil (4) to the one or more energy distribution grids (1) in case of an energy demand within the one or the one or more energy distribution grids (1) and/or to transfer energy from the one or more energy distribution grids (1) to the vehicle (3) or the vehicles (3) passing the respective inductive charging coil (4) in case of an energy surplus within the one of the one or more energy distribution grids (1).

5. The method according to claim 2, the step of controlling the transfer of energy comprising:
- when the vehicle (3) passes the one of the one or more inductive charging coils (4), controlling, by an energy management system (7) of the one or more of the energy distribution grids (1), the one of the one or more inductive charging coils (4) to receive energy from the energy storage (2) of the vehicle (3) via inductive coupling (9) in case of an energy demand within the energy distribution grid (1) and to transmit energy to the energy storage (2) of the vehicle (3) via inductive coupling (9) in case of an energy surplus within the energy distribution grid (1).

6. The method according to claim 2, the step of controlling the transfer of energy comprising:
- checking by an energy management system (7) of the one or more of the energy distribution grids (1), in particular by means of a traffic management system (8), or a traffic management system (8) the charging status of the energy storages (2) of the vehicles (3) to determine, whether the energy storages (2) of the vehicles (3) can be charged, or de-charged, respectively, and
- sending a notification message to the vehicles (3) with the energy storages (2) to be charged to cause them to use the one or more roads (6) in which the one or more inductive charging coils (4) are implemented, which are electrically connected (5) with the one or more energy distribution grids (1) with an energy surplus, and to transfer energy from the one or more energy distribution grids (1) with an energy surplus to the one or more vehicles (3) passing the respective inductive charging coil (4) and/or
- sending a notification message to the vehicles (3) with the energy storages (2) to be de-charged to cause them to use the one or more roads (6) in which the one or more inductive charging coils (4) are implemented, which are electrically connected with the one or more energy distribution grids (1) with an energy demand, and to transfer energy from the one or more of the vehicles (3) passing the respective inductive charging coil (4) to the one or more energy distribution grids (1) with an energy demand.

7. The method according to claim 2, the step of controlling the transfer of energy comprising:
- notifying, by the traffic management system (8), the vehicles (3) with energy storages (2) to be charged to cause them to use the roads (6) in which the one or more charging coils (4) are implemented, which are electrically connected (5) with an energy distribution grid (1), where an energy surplus is expected, and/or
- notifying, by the traffic management system (8), the vehicles (3) with energy storages (2) to be de-charged to cause them to use the roads (6), in which the one or more charging coils (4) are implemented, which are electrically connected (5) with an energy distribution grid (1), where an energy demand is expected, wherein the energy management system (7) determines the energy surplus or demand of the one or more energy distribution grids (1) to be expected and notifies the traffic management system (8) of the energy distribution grids with an energy surplus and/or of the energy distribution grids with an energy demand, respectively.

8. The method according to claim 2, the step of controlling the transfer of energy comprising:
- controlling, by the traffic management system (8), the transfer of energy from vehicles (3) passing coincidentally those roads (6) in which inductive charging coils (4) are implemented, which are electrically connected (5) with the one or more energy distribution grids (1), to the one or more energy distribution grids (1) via inductive coupling according to the energy storage status of the vehicles (3) and the energy surplus or demand of the one or more energy distribution grids (1).

9. The method according to claim 2, the step of controlling the transfer of energy comprising:
- activating the inductive coupling element (11) of the vehicle (3) to enable the transfer of energy from one or more energy distribution grids (1) with an energy surplus to the vehicle (3) via inductive coupling (9) between one or more of the inductive charging coils (4) which are implemented into the one or more roads (6) adjacent to the one or more energy distribution grids (1), and the inductive charging element (11) of the vehicle, whereby the energy storage (4) of the vehicle (3) is charged; and/or
- activating the inductive coupling element (11) of the vehicle (3) to enable the transfer of energy from the vehicle (4) to one or more of the energy distribution grids (1) with an energy demand via inductive coupling (9) between the one or more inductive charging coils (4), which are implemented into the one or more roads (6) adjacent to the one or more energy distribution grids (1), and the inductive coupling element (11) of the vehicle (3), whereby the energy storage (2) of the vehicle (3) is de-charged.

10. The method according to claim 9, wherein the vehicle (3) activates the one or more inductive charging coils (4), which are implemented into the one or more roads (6) adjacent to the one or more energy distribution grids (1),
to enable the transfer of energy from the one or more energy distribution grids (1) with an energy surplus to the vehicle (3) via inductive coupling (9) between the one or more inductive charging coils (4), which are implemented into the one or more roads (6) adjacent to the one or more energy distribution grids (1), and the inductive charging element (11) of the vehicle, whereby the energy storage (4) of the vehicle (3) is charged, and/or
to enable the transfer of energy from the vehicle (4) to the one or more energy distribution grids (1) with an energy demand via inductive coupling (9) between the one or more inductive charging coils (4), which are implemented into the one or more roads (6) adjacent to the one or more energy distribution grids (1), and the inductive coupling element (11) of the vehicle (3), whereby the energy storage (2) of the vehicle (3) is de-charged.

11. The method according to claim 9, wherein the vehicle (3) checks the status of the energy storage (2) to determine, if the energy storage (2) of the vehicle (3) is to be charged or de-charged, so as to use roads (6) of an energy distribution grid (1) with energy surplus, if the energy storage of the vehicle (3) is to be charged, and to use roads (6) of an energy distribution grid (1) with energy demand, if the energy storage (2) of the vehicle (3) is to be de-charged.

12. The method according to claim 11, wherein the vehicle (3) after determining the status of its energy storage sends a request message to the energy management system (7), in particular via the traffic management system (8), or to a traffic management system (7) to be notified about the roads (6) to be used by the vehicle (4) to pass the one or more inductive charging coils (4) implemented into the respective roads (4) in order to transfer energy from the energy storage (2) of the vehicle (3) to the one or more energy distribution grids (1), whereby the energy storage (2) of the vehicle (3) is de-charged, or to transfer energy from the one or more energy distribution grids (1) to the energy storage (2) of the vehicle (3), whereby the energy storage (2) of the vehicle (3) is charged.

13. The method according to claim 5, wherein the energy management system (7) activates the inductive charging coils (4), which are implemented into the one or more roads (6) adjacent to the one or more energy distribution grids (1), if a vehicle (3) passes the one or more roads (6), into which one or more inductive charging coils (4) are implemented, to enable the transfer of energy from one or more energy distribution grids (1) with energy surplus to the vehicle (3) via inductive coupling (9) between the one or more inductive charging coils (4), which are implemented into the one or more roads (6) adjacent to the one or more energy distribution grids (1), and the at least one inductive charging element (11) of the vehicle, whereby the energy storage (4) of the vehicle (3) is charged, and/or to enable the transfer of energy from the vehicle (4) to one or more energy distribution grids (1) with an energy demand via inductive coupling (9) between the one or more inductive charging coils (4), which are implemented into the one or more roads (6) adjacent to the one or more energy distribution grids (1), and the at least one inductive coupling element (11) of the vehicle (3), whereby the energy storage (2) of the vehicle (3) is de-charged.

14. A vehicle (3) comprising an energy storage (2), a control unit (10) and at least one inductive coupling element (11), wherein the at least one inductive coupling element (11) is adapted to enable a transfer of energy from and/or to one or more energy distribution grids (1) to and/or from the vehicle (3), respectively, via inductive coupling (9) between the inductive coupling element (11) of the vehicle (3) and one or more inductive charging coils (4) implemented into one or more roads (6) adjacent to the one or more energy distribution grids (1), in case the vehicle (3) passes the one or more roads (6), in which the inductive charging coils (4) are implemented, and the control unit (10) is adapted to control the transfer of energy from the energy storage (2) of the vehicle (3) via inductive coupling to one or more energy distribution grids (1) and/or the transfer of energy from one or more energy distribution grids (1) via inductive coupling to the energy storage (2) of the vehicle (3).

15. An energy management system (7) for one or more energy distribution grids (1), wherein the energy management system (7) is adapted to detect an energy surplus and/or an energy demand within the one or more energy distribution grids (1), and to control a transfer of energy from an energy storage (2) of a vehicle (3) or from energy storages (2) of two or more vehicles (3) via inductive coupling to the one or more energy distribution grids (1) in case of an energy demand within the one or more energy distribution grids (1) and/or a transfer of energy from the one or more energy distribution grids (1) via inductive coupling to the energy storage (2) of a vehicle (3) or to the energy storages (2) of two or more vehicles (3) in case of an energy surplus within the one or more energy distribution grids (1).
